# EUROPEAN PATENT APPLICATION

(11) **EP 1 130 871 A1**
(43) Date of publication of application: **05.09.2001**
(21) Application number: 00301644.1
(22) Date of filing: 01.03.2000
(51) Int. Cl.: H04L 29/06, H04N 5/445, G06F 17/30

(54) **Media session discovery**

(71) Applicant: BRITISH TELECOMMUNICATIONS public limited company, London EC1A 7AJ (GB)
(72) Inventor: The designation of the inventor has not yet been filed
(74) Representative: Shelley, Mark Raymond

(57) **Abstract**

The invention provides a method of accessing data relating to announced media sessions that are to take place over a communications network such as the Multicast Internet. The data may include scheduling, title and content information, for example. The method comprises the steps of:- i) establishing a communications channel between a user terminal and a database system (605), where the database system comprises session specific data relating to respective media sessions available over a communications network; ii) determining the identity of the user by unique identification code or otherwise (610); ii) retrieving user specific data for that user (625); iii) selecting from the media sessions, in accordance with said user specific data, at least one media session relevant to the user (630); and iv) returning session specific data identifying the relevant media session or sessions to the user terminal (635). In another aspect the invention provides a method of configuring a media session database.

## Description

This invention relates to media session discovery and in particular a method and system for accessing media session descriptions transmitted over a communications network.

Multicast transmissions are becoming increasingly common on the Internet. In contrast to standard Internet Protocol (IP) point to point transmissions (unicast), IP multicast allows the simultaneous transmission of information to a group of recipients from a single source. Routing support for IP multicast transmissions is provided by the MBone (IP Multicast Backbone) which is a virtual network layered on top of the Internet.

IP multicast allows real-time communications over wide area IP networks and typical transmissions include video and audio conferencing, live multimedia training, university lectures, and transmission of live television and radio programmes, for example.

A multicast transmission usually consists of a multimedia session made up of one or more individual media streams typically carrying video, audio, whiteboard or raw data. Some sessions are persistent, but the majority exist for a specific period of time, although need not be continuous. Multicast based transmissions on the MBone differ from unicast IP transmissions in that any user receiving the transmission can join the session (unless the transmission is encrypted) and to receive a transmission, a user need only know the appropriate transmission address and timing information.

Prior to a multicast transmission an appropriate announcement containing a session description is made, usually at an IP group multi-cast address. Standard session descriptions are generated using Session Description Protocol (SDP), as defined in the Internet Engineering Task Force's draft RFC 2327. SDP is a simple ASCII text based protocol that is used to describe real time multimedia sessions and their related scheduling information. SDP messages are wrapped in a carrier protocol, known as a Session Announcement Protocol (SAP), which, in addition to containing the necessary IP addressing and routing information for transmission across the Internet or MBone, allows the SDP message to be encrypted, signed or compressed. An announcement can then be sent at regular intervals to the announcement group address. As an alternative to SAP, a session may be announced by placing an SDP message on a World Wide Web site (WWW) or by sending it to individuals by email or as a unicast transmission inviting them to participate.

An SDP message conveys information about each media stream in the multicast multimedia session to allow the recipients to participate in the session. A typical SDP message will include the session name and purpose, the time(s) and date(s) the session will be active, the component media streams of the session and information required to participate in each media stream (IP multicast address, port, media format). The SDP message may also include details of the session's bandwidth requirements, an encryption key necessary to participate in a secure multicast transmission using public key encryption, contact information for the organiser of the multicast session, and a Unique Resource Indicator (URI) pointing to a WWW or an Intranet web site where further information on the session may be found, for example, background information relating to the conference.

The level of participation a user may make in a session or stream depends on its purpose. In a multicast television session, typically users would only be able to receive the session streams whilst in a multicast conference session the communication would be bi-directional with a central server receiving each participants transmissions and relaying them to the other participants.

A common front-end interface used by multicast end users is known as Session Directory Rendezvous (SDR). This interface takes the received announcements, decodes the SDP message and displays the names of those sessions that are still current in a list. The end user may then select one of the listed announcements to view further technical and user-oriented details of the announced session. From the displayed information, the end user can then select to join individual streams of the session or to join the entire session. Once the streams to be joined are selected, SDR starts the necessary multicast-enabled multimedia application on the end user's computer, such as Vic, Vat, or wb etc and passes the relevant stream information (a transport port address) from the announcement onto the application allowing the application to establish the link to the associated IP multicast address and participate in the stream at transmission time. Having initiated the applications and passed the relevant transport port address SDR plays no further part in the session.

Recent increased usage and demand for real time multimedia streaming on the Internet has highlighted a number of limitations with both existing session description protocols and session discovery tools such as SDR. One limitation is the lack of information focus provided by the session discovery tools. For instance, SDR displays all current media sessions irrespective of session content, timing or source address. A further limitation is that SDR does not provide a search function utility, that is to say, it does not allow users to search cached announcements for content specific media sessions or multicast channels (or more precisely group addresses). This lack of information focus is compounded by the fact that at the end of 1999 there were over 8000 radio stations and 100 television stations "broadcasting" live on the Internet, that is to say, transmitting multicast packets comprising real time media streams to multicast group addresses. As the demand for real time multimedia increases it is envisaged that session discovery tools such as SDR will become overloaded and unable to present meaningful information.

World Wide Web (WWW) search engines provided by so called Web Portal companies or Internet Service Providers (ISP's) such as "Excite" allow users to actively search the WWW for Web pages associated with and containing information on multicast media sessions and channels. Search engines typically comprise so-called "robots" or "crawlers" which are computer programs that continually search the Internet for new WWW sites and pages. These programs send back information including Web page keywords and/or metadata found in Web page title blocks. This information is used to index Web pages in the search engine databases.

Information focus is also major problem with the WWW and this can affect the ability of search engines to find specialised content such as Web pages containing media session descriptions. Moreover, the use of search engines can be problematic for novice and unskilled users unfamiliar with concepts such as keyword searches and search phrases.

The lack of information focus on the WWW is also a problem for multicast service providers such as radio and television stations as it is difficult to target session announcements to interested parties.

According to a first aspect of the invention there is provided a method of accessing media session data in a database system in response to instructions from a user terminal, said method comprising the steps of:-
establishing a communication channel between a user terminal and a database system, said database system comprising session specific data relating to respective media sessions available over a communications network;
determining the identity of the user;
retrieving user specific data for that user;
selecting from said media sessions, in accordance with said user specific data, at least one media session relevant to the user;
returning session specific data identifying the relevant media session or sessions to the user terminal.

This allows a user to readily access media session data that is specifically relevant to that user regardless of the quantity of media session data contained in the database. By retrieving user specific data the database is able to recognise media sessions that are of particular relevance to individual users. In this way the database can be easily scaled to provide searching facilities for many hundreds or thousands of multicast channels. Thus, session announcements transmitted over the Multicast Internet or Mbone can be stored in a central database that is connected to the MBone and accessed by remote users using dial up modems or other non-Mbone dedicated communication links. Information focus is improved since users are only forwarded data relating to media sessions that are directly relevant to them. This provides advantages not only for database users but also for media session providers since media session data is more likely to be found by interested users. The above method overcomes many of the problems associated with searching the WWW for relevant information relating to media sessions. The central nature of the database provides for economy since only the database need be connected to the Multicast Internet, the user terminals can be readily connected to permanent or dynamically allocated communication ports associated with the database in much the same way that dial up modems connect users, or more precisely user terminals, to the Internet through a WWW Portal or ISP. When implemented in a WWW based environment the combination of categorised session announcements and user specific data permits each user to be presented with customised data relating to those categories of personal interest, for example television media sessions categorised as sport. In this way users can be presented with personalised "Web pages" of user selected information.

Preferably, the step of selecting at least one media session comprises the step of comparing said session specific data with said user specific data and selecting at least one relevant media session according to said comparison. This provides for efficient and accurate searching of the database for relevant session specific data.

Conveniently, said user specific data identifies at least one media session category selected by the user. In this way, session specific data can be accessed according to pre-defined selected categories. This improves information focus since the selected categories provide an information filter for user access to the session specific data.

In preferred embodiments, said session specific data comprises user-oriented data including at least one media session category. This allows media session providers to readily classify the content of a media session in a session announcement.

Preferably, said step of selecting at least one relevant media session comprises the step of comparing said session specific and user specific category data and selecting one or more sessions according to the comparison. This provides for efficient data retrieval.

Conveniently, a user interface environment is configured in response to user oriented session specific data being returned from the database to the terminal. In this way session specific data can be readily presented in a user-friendly functional manner to the user.

In preferred embodiments, said session specific data is transmitted to the database over the communications network. This allows session providers to readily transmit media session announcements in real time and to many databases in a single multicast transmission.

Preferably, the method further comprises the step of supplying data identifying a user request from the user terminal to the database system. In this way users are able to communicate with the database, for instance to change selected categories etc.

Conveniently, said request conforms to a structured data format. This provides for improved database and communication efficiency since a request format can be standardised for many database users.

In preferred embodiments, the method further comprises the step of selecting in accordance with said session specific data returned to the terminal at least one media session to be received. In this way the user terminal can be configured to receive a multicast transmission announced to the user by way of the transmitted session specific data.

A media session database can be readily configured and indexed according to category parameters contained in media session announcements transmitted over a communication network such as the Multicast Internet. This allows media session providers such as television and radio stations to announce media session descriptions over a communications network such as the Mbone so that session descriptions can be cached and processed by connected databases, for instance WWW Portal or ISP databases. By using a multicast channel to transmit session announcements media session databases connected to the communications network can be readily updated by media session providers, that is to say, media session descriptions can be "pushed" to appropriate databases over the communications network. This has the advantage that Web Portal or ISP databases can be maintained by caching and storing session announcements rather than by storing appropriate Universal Resource Locators (URL's) found by Web "crawlers" or "robots". In this way media session providers can effectively advertise media sessions to the databases without the databases or database users having to find the relevant Web pages beforehand. In addition, information focus and retrieval can be improved by identifying announcements as belonging to one or more appropriate categories.

It will be understood that the order in which the steps are carried out in the above first and second aspects of the invention does not have to be in the order set out above. For instance, the step of determining the identity of the user might be carried out some time in advance of the first step in the aforementioned first aspect of the invention.

An example of the present invention will now be described in detail with reference to the accompanying drawings, in which:
Figure 1 is a schematic diagram illustrating a multicast transmission across the MBone;
Figure 2 is a block diagram of a modular session description of a simple session generated in accordance with the present invention;
Figure 3 is a schematic diagram of a part of an MBone access network;
Figure 4 is a schematic representation of a front end user interface for use in one arrangement of the invention;
Figure 5 is a schematic representation of an editing window provided by the user interface of Figure 4;
Figure 6 is a flowchart showing a method of accessing a media session database.

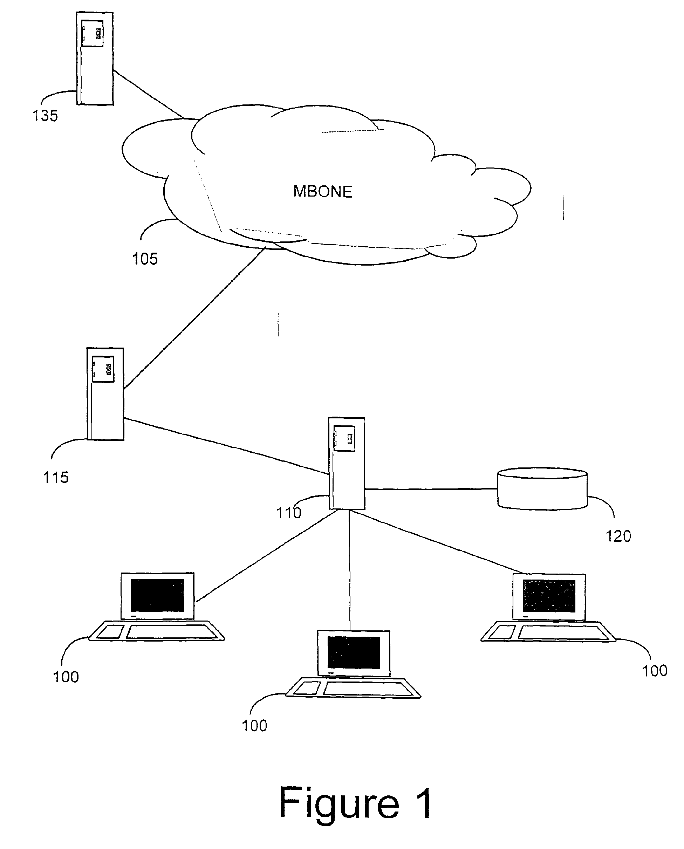

An example of an IP multicast transmission system used in one arrangement of the invention is described with reference to Figure 1. In Figure 1 a plurality of user terminals 100 are connected to the Internet multicast network (Mbone) 105 via respective Internet access servers 110 which are each connected to a respective multicast capable router 115. Each of the access servers is connected to a respective local database system 120 which comprises a session description database 125 for storing cached session descriptions announced on the Mbone and a further database 130 for storing user specific data relevant to end users. In the context of the present invention it is to be understood that the term "end user" comprises not only human users of the terminals 100 but also the terminals themselves and devices connected to the terminals.

Prior to a multicast transmission, an appropriate announcement containing a session description is made to allow end users to elect to receive the transmission. A public multicast session announcement is made on the Mbone 105 using a single well known group IP multicast address dedicated to the transmission of session announcements. Each access server that has elected to join the IP multicast group address receives the multicast session announcement. The concept of joining an IP group address is analogous to that of a television or radio receiver being tuned to a particular frequency or "channel" to receive a television or radio broadcast on that channel.

In one arrangement, each user terminal that elects or is elected to receive the transmission is linked to the IP multicast group address identified in the announcement and the routers associated with the elected terminals are configured to receive multicast packets addressed to that group address. The session streams are then transmitted from one or more media sources 135 to the terminals of the multicast group.

In another arrangement, user terminals connect to the media source IP address identified in the session announcement and separate unicast media streams are transmitted to the IP addresses of the respective terminals. Thus, there is no requirement for the terminals to be multicast enabled.

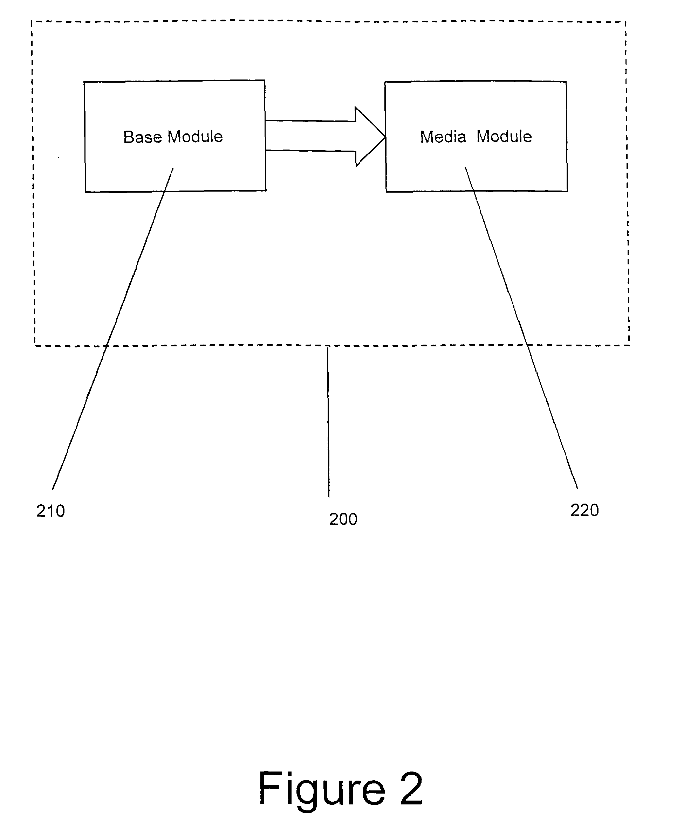

Figure 2 is a block diagram of a session description 200 for a simple television session. The session description does not conform to SDP although SDP could be used in an alternative embodiment to that described. The session description 200 comprises a base module 210 linked to a media module 220.

The base module 210 contains user-oriented session specific data including the session title and timing information. In particular the base module includes a category field for session classification purposes. In the example shown below the category field of the media session is "Entertainment". Other categories for television sessions include for example, news, sport, movies, documentary, science, drama etc. Appropriate categories for other real time media sessions are also envisaged. These sessions include radio sessions, live or archived music sessions and networked game sessions, for example. A category field may be added as a so called "attribute" extension field to session announcements constructed in accordance with SDP.

The base module 210 may also include a description or abstract, contact information about the organiser and a WWW or an intranet URL pointing to a web site containing further information. The base module 210 contains information necessary for the user to decide if they are interested in participating in the session. The media module 220 contains announcement data relating to a video stream of the session. The media module 220 contains the technical information necessary for the user terminal to receive the associated media stream. In particular, connection, timing and media format details are provided. The connection field of the media module contains the group IP multicast address and port number from which the media stream can be received, or alternatively, the IP address of the media source if the media stream is unicast.

An example of a session description 200 generated for a television media session is shown below:

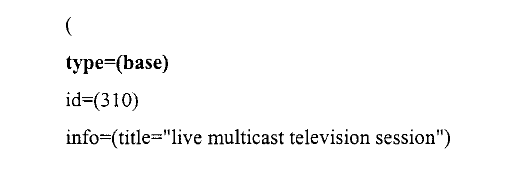

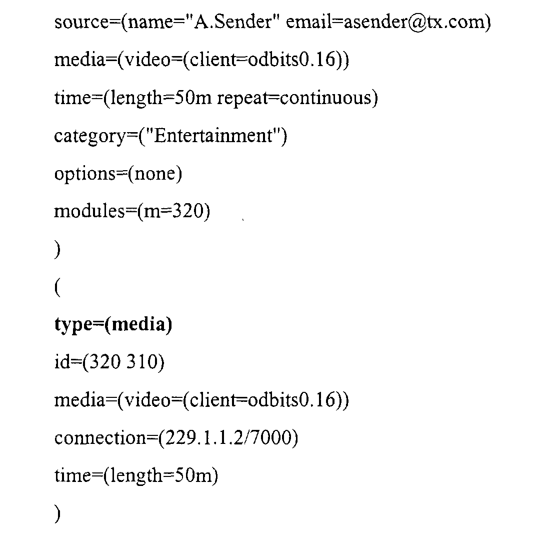

The base module 210 has a unique identifier (id field) used in the generation of links between two modules during the processing of the session description. The module field of the base module 210 lists the type and unique identifier of the media module 220 linked to the base module 210. The second identifier in the id field of the media module 220 is the unique identifier belonging to the base module 210 linking the media module back to the base module 210. By extension, these two-way links permit a module tree to be traversed from a base module downwards or from a media module upwards.

In the system architecture of Figure 1, the Internet access servers 110 are each configured to listen to the dedicated group address and cache session announcements announced to that address. In an alternative arrangement a dedicated proxy server could be used for this purpose, to free local system resources for instance. In this way remote procedural calls could be used to periodically download the cached announcements from the proxy server to one or more access servers 110.

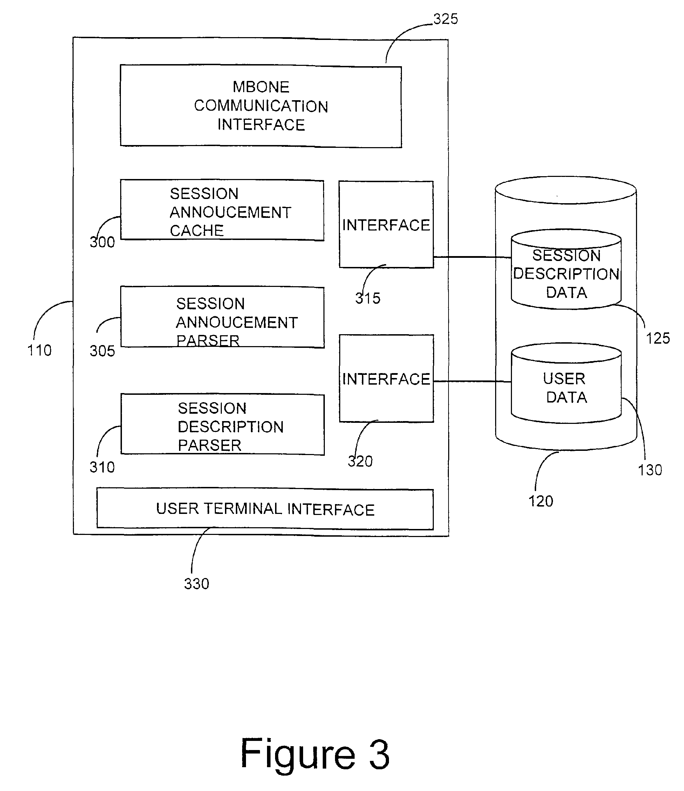

Referring now to Figure 3, each server 110 comprises a cache 300 for caching session announcements transmitted to the dedicated group address, a SAP parser 305 for parsing cached session announcements and a session description parser 310 for parsing session descriptions contained within the session announcements. The session description parser 310 is configured to identify appropriate parameters in the session description 200 for database classification and indexing purposes. Once parsed the session descriptions are stored in the session description database 125. The server 110 is further provided with a first database interface 315 for accessing the session description database and a second database interface 320 for accessing user specific data in the database 130.

In one arrangement the data contained in the session specific database 125 comprises data entries for at least all the fields shown in the example modular session description 200 previously described. For instance, the database 125 comprises an entry for the id field, information field, source field, category field etc, of the base module and an entry for the id field, media field, and connection field of the media module. The database 125 is configured to recognize each media session announcements as belonging to a particular media session category as defined in the category field of respective session announcement. In this respect a plurality of category names are defined so that each media session announcement contains an entry in its respective category field that is identifiable by the database 125 according to a standard list of category entries stored in the database 125.

When a session announcement containing a session description is received over the communications network it is first cached by the cache 300. The Cache 300 stores the session announcement in its pre-processed form, that is to say as a plurality of cached SAP IP packets. The announcement is then processed first by the SAP parser 305 to determine the session description contained in the session announcement and then by the session description parser 310 to determine the contents of the session description, that is to say to identify the data entries in each of the respective fields of the session description. In particular the session description parser 310 identifies which respective category the session description belongs to according the respective category field data entry that is contained in the session description. The parsed session description data is then stored in the database 125 where it is classified according to its respective category field for subsequent retrieval.

Database 130 stores user specific or user profile data relating to the real time media preferences of each respective user registered with the database. These preferences comprise timing preferences, content or category preferences, media channel or session provider preferences, for example. In this respect a user profile may include a pre-determined preference for each data field contained in the session description.

The access server 110 also includes a first communications interface 320 for communicating with the user terminals connecting or connected to it. In the arrangement shown the communications interface 325 provides an IP connection to the user terminals for the transfer of HTML or XML request and response messages using the hypertext transfer protocol (HTTP). A second communication interface 330 is provided for receiving multicast IP packets from the associated router 115.

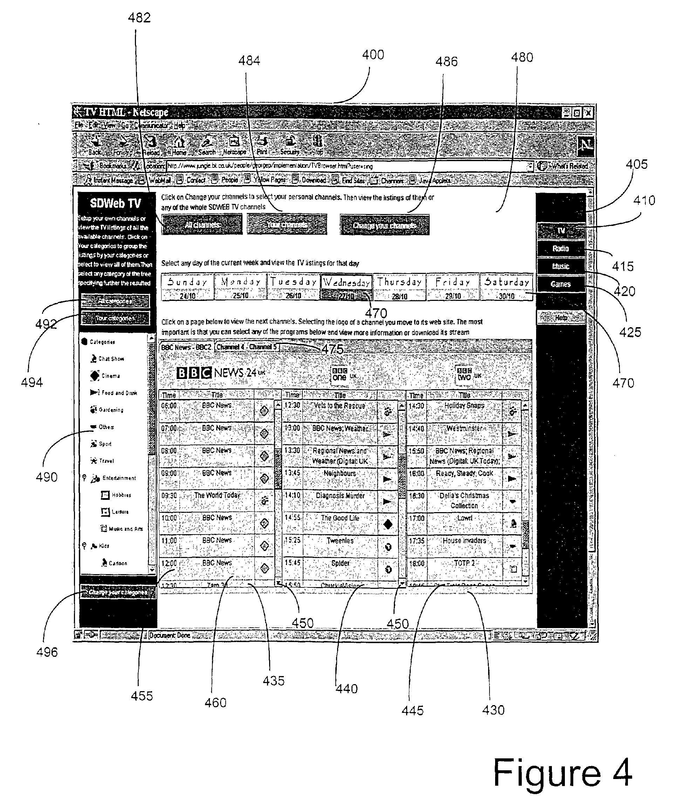

An example of a front-end graphical user interface 400 for the user terminals 100 is shown in Figure 4. The user interface allows users to interact with the local Internet access servers 110 for receiving real time multicast media streams and accessing the database 130. The user interface is divided into five main area blocks.

The first block 405, to the right of the drawing in Figure 4, comprises a main menu including four buttons which relate to four different streamed media channel types. A first button 410 is labeled "TV" and is used to access media session listings for one or more television channels, a second button 415 is labeled "Radio" and is used to access session listings for one or more radio channels, a third button 420 is labeled "Music" and is used to access media session listings for live and archived music channels and a fourth button 425 is labeled "Games" which is used to access live networked game media session listings. A user selects one of the four media channel types to be displayed by positioning a mouse cursor over the appropriate button and executing a mouse click or other suitable command.0

In the drawing of Figure 4 the TV button 410 has been selected and the listings for various television channels are displayed in a second block 430 which comprises the central lower portion of the interface shown in Figure 4. In the drawing partial listings for three television channels "BBC News 24", "BBC One" and "BBC Two" are shown side by side in respective adjacent sub-blocks 435, 440 and 445 within the listing block 430. These three channels are displayed in the foreground in block 430. The listings for two other channels "Channel 4" and "Channel 5" are shown in the background and may be moved to the foreground for display by user selection of an appropriately labeled tab 475 by mouse click or otherwise. The listings are displayed in chronological order and scroll bars 450 are provided on the right hand side of the sub-blocks to enable users to scroll the display up and down using mouse or keyboard commands to navigate channel listings for an entire day. As shown, the sub blocks 435, 440 and 440 comprises a first column 455 that indicates the time of transmission of the media session and a second column 460 that indicates the title of the media session.

A third block 465 is positioned above the listing block 430 in the drawing and comprises seven buttons 470, one for each day of the week. Selection of one of these buttons by mouse click or other like command displays the corresponding day's listings for the current foreground channels in the listing block 430.

An important feature of the user interface 400 is that it allows users to display listings for all channels of a specific type, for example television or radio, or only a pre-determined set of user selected channels. Similarly, the user interface allows users to display listings for all categories of media session, such as news or entertainment, or only a pre-determined set of user selected categories.

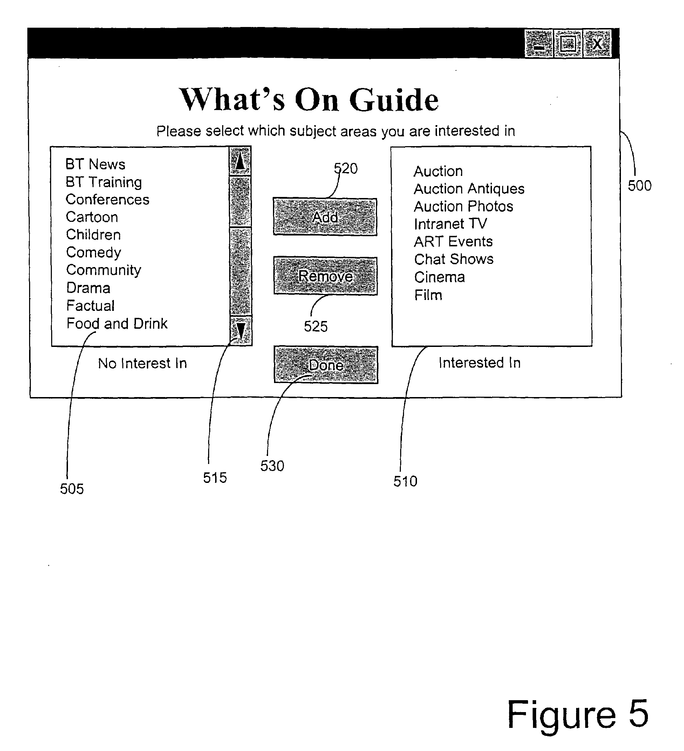

A fourth block 480 is positioned towards the top of the drawing and comprises three buttons 482, 484 and 486. The first button 482 is labeled "All channels" and its selection by mouse click or like command causes the listings of all channels from a list of channels to be displayed. In the interface shown in Figure 4 only the first three channels are actually displayed in the foreground, the remainder are accessible from the background by clicking on background tabs like tab 475 as previously described. The second button 484 is labeled "Your channels" and its selection causes the listing of only a pre-determined set of user selected channels to be displayed. The third button 486 is labeled "Change your channels" and its selection allows a user to change their selected channels. The function of button 486 will be described in greater in the description relating to Figure 5 later in the specification.

The fifth block 490 is positioned to the left of the drawing and comprises three buttons 492, 494 and 496. The first button 492 is labeled "All categories" and its selection by mouse click or like command causes the listings of all categories of media session from a list of categories to be displayed. The second button 494 is labeled "Your categories" and its selection causes the listing of only a pre-determined set of user selected media session categories to be displayed. The third button 496 is labeled "Change your categories" and its selection allows a user to change their selected categories. The function of button 496 like 486 will be described in greater detail in the description relating to Figure 5 which follows.

Referring to Figure 5, when a user selects the option "Change your categories" by clicking on button 496 a window 500 is displayed on the user terminal. The window 500 comprises two category boxes 505 and 510 which are position side by side in spaced relation. Both boxes contain a list of categories which together define a complete list of categories for the available media sessions. The boxes are both provided with scroll bars 515 which allow up and down scrolling of the text in the respective boxes by the user. Box 505 which is on the left of the drawing contains the media session categories that are not of interest to the user and box 510 which is on the right contains those categories that are of interest to the user. Two buttons 520 and 525 are provided for moving categories between the two boxes. The first button 520 allows a user to add a selected category from box 505 to box 510 and the second button 525 allows a selected category to be removed from box 510 to box 505. Categories are moved between boxes by the user selecting the category that is to be moved, by mouse click or otherwise, and then selecting the appropriate button. When all the changes have been made they are saved by the user selecting button 530 by mouse click or other like command.

When a user selects the option "Change your channels" by clicking on button 486 a similar window (not shown) to window 500 is displayed on the user terminal. The window is the same as window 500 except that it lists channels instead of categories and allows changes to be made to "Your channels" instead of "Your categories". These category and media channel preferences are stored as part of a user profile for each user in the database 130. These records are updated each time a user changes their respective preferences at a user terminal.

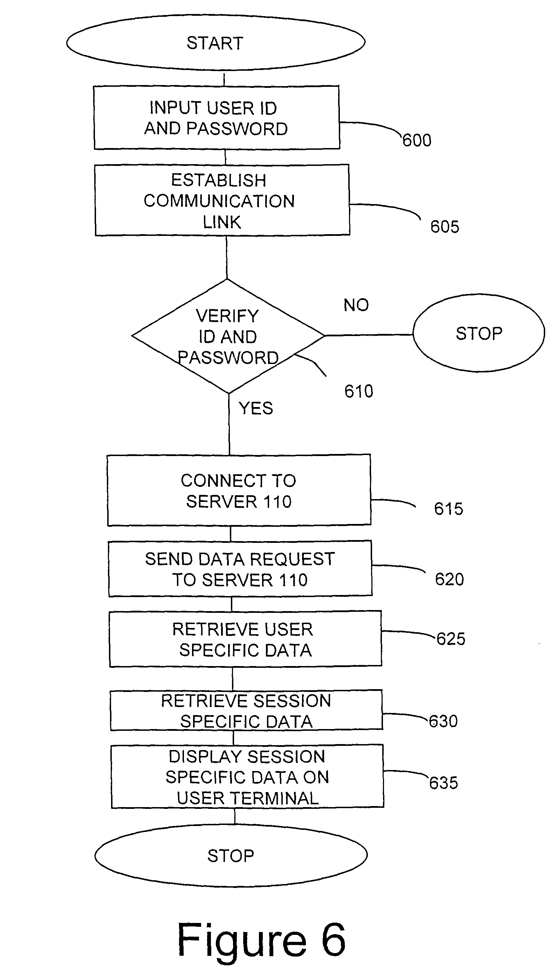

Referring now to the flowchart of Figure 6. A user wishing to access media session announcements held in the database 125 is required to input an allocated unique personal identification code and password at a user terminal in step 600. In step 605 a communications link is established between the user terminal and a respective Internet access server. The user identification code and password are verified by the access server in step 610 and if verification is confirmed the user terminal is granted access to the database system 120 under control of the server in step 615. The user is then prompted to send a request to the server from the terminal in step 620 to display cached session announcements according to the user's pre-defined selections for one of the four media stream channel types. If a request is sent the server accesses the database 130 and retrieves the user profile or user specific data for the identified user in step 625. The access server then accesses the session announcement database 125 in step 630 and retrieves the session specific data for each session that matches the user profile for the requested channel type. The data is then sent as a response to the user terminal for manipulation and display by the user interface.

The user may request more information about a particular session by clicking on the title of the session in the listing block 430. This command is recognised by the user terminal and a further request is sent to the access server for further information contained in the relevant session description, for instance an abstract or press review. If further information is available this is sent to the user terminal for display by the user interface. If the media session is being transmitted or is about to be transmitted the user can elect to join the session to receive the media stream by clicking a join now button (not shown) presented on the user interface. If the user elects to join a session a network HTTP connection is made to the media steam server identified in the connection field of the respective session description. The connection provides a link between the user terminal and the media stream server for the transfer of HTML or XML structured data requests. Media stream data is transferred to the user terminal using Real Time Protocol (RTP) over UDP, for instance.

The user may send a request to view the cached session descriptions of a different media channel type, for instance radio instead or television, by clicking the appropriate button in the main menu block. HTML or XML requests are sent to the access server by the user terminal to view the relevant session descriptions.

Although the present invention has been described with specific reference to the Internet and multicast it will be apparent that the described methods are applicable to other communication transport mechanisms, in particular communications networks that are configured to transport multicast packets over non-multicast uni-cast tunnels.

## Claims

**1.** A method of accessing media session data in a database system in response to instructions from a user terminal, said method comprising the steps of:-
establishing a communication channel between a user terminal and a database system, said database system comprising session specific data relating to respective media sessions available over a communications network;
determining the identity of the user;
retrieving user specific data for that user;
selecting from said media sessions, in accordance with said user specific data, at least one media session relevant to the user;
returning session specific data identifying the relevant media session or sessions to the user terminal.

**2.** A method according to claim 1 wherein the step of selecting at least one media session comprises the step of comparing said session specific data with said user specific data and selecting at least one relevant media session according to said comparison.

**3.** A method according to claim 1 or claim 2 wherein said user specific data identifies at least one media session category selected by the user.

**4.** A method according to claim 3 wherein said session specific data comprises user oriented data including at least one media session category.

**5.** A method according to claim 4 wherein said step of selecting at least one relevant media session comprises the step of comparing said session specific data and said user specific category data and selecting one or more sessions according to the comparison.

**6.** A method according to any preceding claim wherein a user interface environment is configured in response to user oriented session specific data being returned from the database to the terminal.

**7.** A method according to any preceding claim wherein said session specific data is transmitted to the database over the communications network.

**9.** A method according to any preceding claim further comprising the step of supplying data identifying a request for relevant session specific data from the user terminal to the database system.

**10.** A method according to claim 9 wherein said request conforms to a structured data format.

**11.** A method according to claim 10 wherein said structured data format conforms to HTML or XML.

**12.** A method according to any preceding claim further comprising the step of selecting in accordance with said session specific data returned to the terminal at least one media session to be received.

**13.** A system for accessing media session data in a database in response to instructions from a user terminal, said system comprising:-
communication means for establishing a communication channel between a user terminal and a database, said database comprising session specific data relating to respective media sessions available over a communications network;
determining means for determining the identity of the user;
means for retrieving user specific data for that user;
selecting means for selecting from said media sessions, in accordance with said user specific data, at least one media session relevant to the user;
means for returning session specific data identifying the relevant media session or sessions to the user terminal.
